# EUROPEAN PATENT APPLICATION

(11) **EP 4 773 214 A1**
(43) Date of publication of application: **08.07.2026**
(21) Application number: 24892853.3
(22) Date of filing: 22.07.2024
(51) Int. Cl.: H01M 4/136, H01M 4/36

(54) **POSITIVE ELECTRODE SHEET AND PREPARATION METHOD THEREFOR, BATTERY AND ELECTRIC DEVICE**

(30) Priority: 23.11.2023 CN 202311580592
(71) Applicant: Contemporary Amperex Technology Co., Limited, Ningde, Fujian 352100 (CN)
(72) Inventor: YANG, Zhoufei, Ningde, Fujian 352100 (CN); PEI, Zhenxing, Ningde, Fujian 352100 (CN); LI, Xiaowei, Ningde, Fujian 352100 (CN)
(74) Representative: Ziebig Hengelhaupt Intellectual Property Attorneys Patentanwaltskanzlei PartGmbB
(86) International application number: PCT/CN2024/106833
(87) International publication number: WO 2025/107689

(57) **Abstract**

A positive electrode sheet and a preparation method therefor, a battery and an electric device. The positive electrode sheet comprises a positive current collector and a positive active layer arranged on at least one surface of the positive current collector, wherein the positive active layer comprises a first active layer and a second active layer, and the second active layer is located between the positive current collector and the first active layer; and the first active layer comprises a first positive active material, and the second active layer comprises a second positive active material, the operating voltage interval of the first positive active material being greater than the operating voltage interval of the second positive active material, and the operating voltage interval of the second positive active material being less than or equal to 3.0 V. The first positive active material starts to be attenuated after a relatively large voltage plateau, and the effect of continuing an operating voltage is achieved by means of the lower operating voltage interval of the second positive active material, thus expanding the voltage interval range of high-power discharge; in addition, the second positive active material still has reaction activity in a relatively low state of charge, and thus has a good discharge capacity.

## Description

The present application claims priority to Chinese Patent Application No. 202311580592.4 entitled "POSITIVE ELECTRODE PLATE AND PREPARATION METHOD THEREFOR, BATTERY, AND ELECTRIC DEVICE" and filed with China National Intellectual Property Administration on November 23, 2023, the content of which is incorporated herein by reference in its entirety.

### TECHNICAL FIELD

The present application relates to the technical field of batteries, and in particular, to a positive electrode plate and a preparation method therefor, a battery, and an electric device.

### BACKGROUND

In recent years, new energy vehicles have experienced vigorous development. Battery drive systems are a main factor affecting the performance and cost of new energy vehicles. Secondary batteries, due to their characteristics of high energy density, low memory effect, high operating voltage, and the like, have become the preferred solution for power batteries in battery drive systems of current new energy vehicles.

A secondary battery cell generally includes a positive electrode plate, a separator, and a negative electrode plate. The positive electrode active material in the positive electrode plate generally undergoes rapid decline after a certain discharge voltage plateau, thereby affecting the discharge capability of the batteries.

### SUMMARY

In view of the above problems, the present application provides a positive electrode plate and a preparation method therefor, a battery, and an electric device, aiming to solve the technical problem of how to enable the positive electrode plate to have a good discharge capability.

In a first aspect, the embodiments of the present application provide a positive electrode plate. The positive electrode plate includes a positive electrode current collector and a positive electrode active layer disposed on at least one surface of the positive electrode current collector, where the positive electrode active layer includes a first active layer and a second active layer, with the second active layer being located between the positive electrode current collector and the first active layer;
the first active layer includes a first positive electrode active material, the second active layer includes a second positive electrode active material, an operating voltage range of the first positive electrode active material is greater than an operating voltage range of the second positive electrode active material, and the operating voltage range of the second positive electrode active material is less than or equal to 3.0 V.

Through the combination of positive electrode active materials with different operating voltage ranges for the positive electrode active layer-specifically, the operating voltage range of the first positive electrode active material in the first active layer on a side distal to the positive electrode current collector is greater than the operating voltage range of the second positive electrode active material in the second active layer on a side proximal to the positive electrode current collector-when the first positive electrode active material starts to decline after a high voltage plateau, due to the presence of the second positive electrode active material, the operating voltage continuity is achieved with a low operating voltage range of less than or equal to 3.0 V of the second positive electrode active material, thereby expanding the voltage range under high-power discharge conditions of the positive electrode plate according to the present application. Additionally, since the second positive electrode active material on the side proximal to the positive electrode current collector still has reactivity at a low state of charge, such a positive electrode plate enables the battery to have a good discharge capability.

In some embodiments, the operating voltage range of the first positive electrode active material is greater than 3.0 V, and optionally, the operating voltage range of the first positive electrode active material is 3.1 V to 4.0 V; and/or
the operating voltage range of the second positive electrode active material is 1.5 V to 3.0 V.

Through the above combination and selection of the operating voltage ranges of the first positive electrode active material and the second positive electrode active material, the voltage continuity function can be better achieved, and thereby the discharge capability of the battery is improved.

In some embodiments, the first positive electrode active material includes at least one of lithium iron phosphate and lithium manganese iron phosphate; and/or
the second positive electrode active material includes at least one of lithium iron phosphate and lithium manganese iron phosphate, and includes at least one of lithium iron(II) silicate and lithium vanadate at the same time; optionally, in the second positive electrode active material, a ratio of a total weight of lithium iron phosphate and lithium manganese iron phosphate to a total weight of lithium iron(II) silicate and lithium vanadate is 1:1 to 9:1.

Through the above selection and combination of the types of the first positive electrode active material and the second positive electrode active material, the operating voltage range of the first positive electrode active material and the operating voltage range of the second positive electrode active material can meet the range required in the present application.

In some embodiments, a particle size Dv50 of the first positive electrode active material is greater than a particle size Dv50 of the second positive electrode active material; optionally, the particle size Dv50 of the first positive electrode active material is 300 nm to 2 µm, and the particle size Dv50 of the second positive electrode active material is 10 nm to 300 nm.

The positive electrode active material with a small particle size not only has a high charging and discharging power density, but also has a low voltage plateau. Therefore, the combination of the first positive electrode active material and the second positive electrode active material with the above particle sizes can not only enable good voltage continuity, but also make excessively large voltage polarization less likely to occur, thereby further improving the power density.

In some embodiments, a weight ratio of the first positive electrode active material to the second positive electrode active material is 7:3 to 9:1.

In the case of this weight ratio, the overall operating voltage plateau of the positive electrode plate is high, which is conducive to the improvement of the energy density of the battery.

In some embodiments, a coating weight of the first active layer is 160 mg/1540.25 mm² to 500 mg/1540.25 mm², and a coating weight of the second active layer is 16 mg/1540.25 mm² to 100 mg/1540.25 mm²; and/or
a total compaction density of the first active layer and the second active layer is 2.3 g/cm³ to 3.0 g/cm³.

In the case of this coating weight range and the high compaction density, the energy density of the battery can be significantly improved, providing a strong application potential.

In some embodiments, a porosity of the first active layer is greater than a porosity of the second active layer; and/or
a tortuosity of the first active layer is less than a tortuosity of the second active layer.

Through the above combination of the porosities and the tortuosities of the first active layer and the second active layer, the positive electrode plate exhibits a gradient tortuosity distribution and a gradient porosity distribution, thereby reducing the liquid-phase concentration polarization and facilitating high-power charging and discharging.

In some embodiments, a conductive coating layer is further provided between the second active layer and the positive electrode current collector, and a conductive agent is present in an amount of 50%-95% in the conductive coating layer based on a total weight of 100% of the conductive coating layer.

Through the arrangement of the conductive coating layer with a high content of conductive agent, the conductive performance of the positive electrode active layer and the positive electrode current collector can be improved.

In a second aspect, the embodiments of the present application provide a preparation method for the above positive electrode plate. The preparation method includes:
preparing the second active layer on at least one surface of the positive electrode current collector; and
preparing the first active layer on a surface of the second active layer distal to the positive electrode current collector.

Through the sequential preparation of the specific second active layer and first active layer on the positive electrode current collector to obtain the positive electrode plate, the process is simple, the voltage range under high-power discharge conditions can be expanded through the relationship between the operating voltage range of the second positive electrode active material in the second active layer and the operating voltage range of the first positive electrode active material in the first active layer, and thus the reactivity is still present at a low state of charge. Therefore, the prepared positive electrode plate can enable the battery to have a good discharge capability.

In some embodiments, the step of preparing the second active layer on at least one surface of the positive electrode current collector includes:
first preparing the conductive coating layer on at least one surface of the positive electrode current collector, and then preparing the second active layer on a surface of the conductive coating layer distal to the positive electrode current collector, where a conductive agent is present in an amount of 50%-95% in the conductive coating layer based on a total weight of 100% of the conductive coating layer.

Through the preparation of the conductive coating layer with a high content of conductive agent, the conductive performance of the positive electrode active layer and the positive electrode current collector can be improved.

In a third aspect, the embodiments of the present application provide a battery. The battery includes the positive electrode plate provided in the first aspect of the embodiments of the present application and/or a positive electrode plate prepared by using the preparation method provided in the second aspect of the embodiments of the present application.

Based on the characteristics of the positive electrode plate according to the embodiments of the present application, the battery according to the embodiments of the present application is enabled to have a good discharge capability.

In a fourth aspect, the embodiments of the present application provide an electric device. The electric device includes the battery provided in the third aspect of the present application.

By using the battery provided in the second aspect of the embodiments of the present application, the electric device has good charging and discharging performance and can work more efficiently.

The above descriptions are merely a summary of the technical solutions of the present application. To make the technical means of the present application more clearly understood and implemented according to the content of the specification, and to make the above and other objectives, features, and advantages of the present application more apparent and comprehensible, specific implementations of the present application are described in detail below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic structural diagram of a positive electrode plate according to an embodiment of the present application;
FIG. 2 is another schematic structural diagram of a positive electrode plate according to an embodiment of the present application;
FIG. 3 is a graph illustrating a rate-discharge voltage curve of lithium iron phosphate in a positive electrode plate according to an embodiment of the present application;
FIG. 4 is a schematic structural diagram of a battery cell in an implementation of a secondary battery according to an embodiment of the present application;
FIG. 5 is an exploded schematic diagram of the battery cell in the secondary battery shown in FIG. 4;
FIG. 6 is a schematic structural diagram of an implementation of a battery module according to an embodiment of the present application;
FIG. 7 is a schematic structural diagram of an implementation of a battery pack according to an embodiment of the present application;
FIG. 8 is an exploded schematic structural diagram of the battery pack shown in FIG. 7; and
FIG. 9 is a schematic diagram of an implementation of an electric device including the secondary battery according to an embodiment of the present application as a power source.

### Description of the reference numerals:

11-positive electrode current collector; 12-positive electrode active layer; 121-first active layer; 122-second active layer; 123-conductive coating layer;
20-battery cell; 21-housing; 22-top cover assembly; 23-electrode assembly; 30-battery module; 40-battery pack; 41-upper case body; 42-lower case body.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to no less than two (including two). Similarly, "plurality of groups" refers to no less than two (including two) groups, and "plurality of pieces" refers to no less than two (including two) pieces. "At least one" means no less than one (including one, two, three, etc.).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

As traditional energy resources are increasingly reduced, the development of new energy storage devices has received more and more attention. Secondary batteries, due to their high energy density, high theoretical capacity, good cycling stability, and environmentally friendly characteristics, have attracted wide attention. Secondary batteries can not only be applied in energy storage power systems such as hydropower, thermal power, wind power, and solar power stations, but can also be widely applied in electric transportation vehicles such as electric bicycles, electric motorcycles, and electric cars. With the continuous expansion of the application fields of secondary batteries as power batteries, the market demand therefor has been constantly growing, and at the same time, the requirements for performance, such as cycle performance, of the batteries have also been increasingly higher.

The power performance of secondary batteries is closely related to the polarization of the positive electrode during the discharging process of the batteries. A secondary battery cell generally includes a positive electrode plate, a separator, and a negative electrode plate. If the thickness of the electrode plate is excessively large, the degree of polarization is easily increased. In order to reduce the polarization of the positive electrode plate, the positive electrode plate is generally designed to have a low areal coating weight (C.W is generally between 0 and 400 g/1540.25 mm²) in the conventional battery design. In this way, in one aspect, the diffusion path of active ions such as lithium ions can be thinned and the diffusion distance of liquid phase can be shortened, and in another aspect, the transport path of electrons along the thickness direction of the electrode plate can be shortened, and the impedance of electron transport can be reduced. As a result, the effect of reducing the polarization of the positive electrode plate is finally achieved. However, due to the reduction in the areal coating weight, the volume proportion of non-active substances (such as current collectors and separators) in the battery is significantly increased, which reduces the space utilization rate of the positive electrode active material, and thereby results in a decrease in volumetric energy density, which adversely affects the driving range of new energy vehicles. Additionally, the decrease in volumetric energy density may further lead to an increase in battery costs, resulting in increased purchasing costs of new energy vehicles.

As the market penetration of new energy vehicles is increasingly growing, hybrid and extended-range vehicles have gradually entered the market, which has gradually placed higher requirements on the power performance of secondary batteries. Lithium-ion batteries, as one type of secondary batteries, have the characteristics of high energy density, long service life, energy saving, and environmental friendliness, and the like. In the secondary batteries, the positive electrode active material in the positive electrode plate generally undergoes rapid decline after a certain discharge voltage plateau. If there is no operating voltage continuity, the discharge capability of the batteries would be easily affected.

Based on the above consideration, in order to improve the discharge capability of the secondary batteries, a positive electrode active layer including a first active layer and a second active layer is disposed on at least one surface of a positive electrode current collector, and the discharge capacity of the secondary batteries can be improved based on the combination of the operating voltage ranges of the positive electrode active materials in the first active layer and the second active layer. The following technical solutions are thereby proposed.

### Positive electrode plate and preparation method therefor

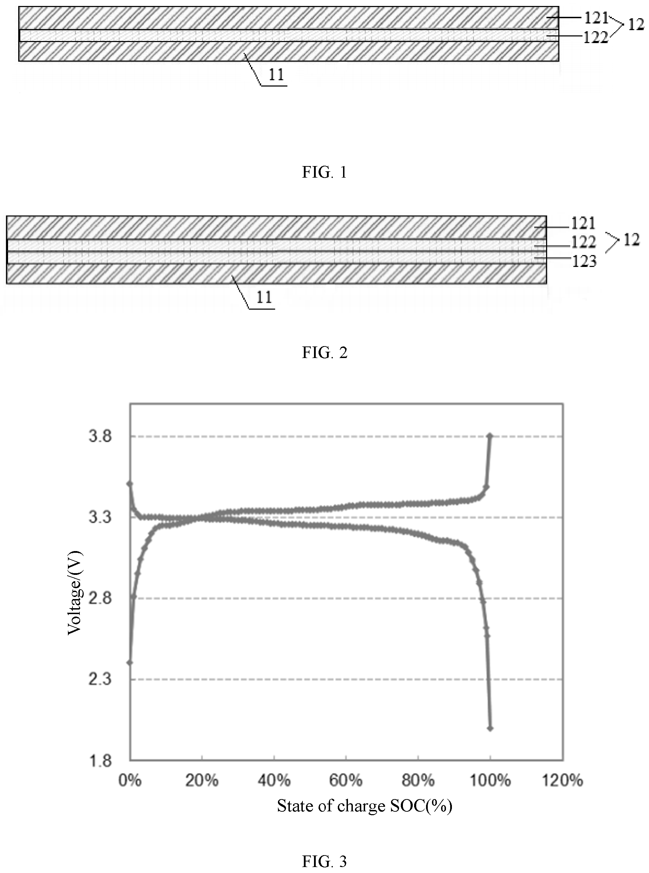

According to a first aspect, the embodiments of the present application provide a positive electrode plate. As a summary of some embodiments of the present application, the positive electrode plate, as shown in FIG.1 and FIG. 2, includes: (1) a positive electrode current collector 11, and (2) a positive electrode active layer 12. The positive electrode active layer 12 is disposed on at least one surface of the positive electrode current collector 11; that is, the positive electrode active layer 12 is disposed on one surface of the positive electrode current collector 11, or the positive electrode active layers 12 are disposed on both opposite surfaces of the positive electrode current collector 11.

The positive electrode current collector 11 is a structure or a component that collects current in the battery. The positive electrode active layer 12 refers to a film layer that contains a positive electrode active material in the battery. During the charging and discharging of the battery, the positive electrode active material in the positive electrode active layer 12 can allow intercalation and deintercalation of active metal ions.

The positive electrode active layer 12 includes a first active layer 121 and a second active layer 122, with the second active layer 122 being located between the positive electrode current collector 11 and the first active layer 121. The first active layer 121 includes a first positive electrode active material, the second active layer 122 includes a second positive electrode active material, and there is a certain relationship between the operating voltage ranges of the first positive electrode active material and the second positive electrode active material; that is, the operating voltage range of the first positive electrode active material is greater than the operating voltage range of the second positive electrode active material, and the operating voltage range of the second positive electrode active material is less than or equal to 3.0 V.

The operating voltage refers to the potential range of reversible reaction of the electrode material in the battery. The operating voltage range of the positive electrode active material in the positive electrode plate according to the embodiments of the present application may specifically refer to the potential variation range of the positive electrode active material during the charging and discharging process, which also reflects the maximum voltage plateau that a battery can provide. Generally, the positive electrode material plate can be assembled into a coin-type half-cell, the discharge energy E and the capacity C of the coin-type half-cell during charging and discharging are tested, and the charge and discharge voltage plateau range of the positive electrode active material may be obtained according to the formula V = E/C.

In the embodiments of the present application, the second positive electrode active material has a low operating voltage range of less than or equal to 3.0 V. Therefore, when the first positive electrode active material starts to decline after a high voltage plateau, due to the presence of the second positive electrode active material, the operating voltage continuity can be achieved with the low operating voltage range of the second positive electrode active material, thereby expanding the voltage range under high-power discharge conditions. Additionally, the second positive electrode active material is located in the second active layer 122, that is, on a side proximal to the positive electrode current collector 11. In this way, the second positive electrode active material still has reactivity at a low state of charge. Therefore, the positive electrode plate according to the embodiments of the present application can enable the battery to have a good discharge capability.

In some embodiments, the first positive electrode active material in the first active layer 121 first comes in contact with the electrolytic solution and generally performs a discharge reaction first. Since the operating voltage range thereof is greater than 3.0 V, a discharge reaction at a high discharge voltage may be performed first. Then, the discharge voltage of the first positive electrode active material undergoes rapid decline after a > 3.0 V plateau. In this way, the addition of the second positive electrode active material with a low operating voltage range can accommodate the abrupt drop of the voltage plateau following the 3.0 V of the first positive electrode active material, achieving the operating voltage continuity, and thereby extending the voltage range of the entire positive electrode active layer 12 under high-power discharge conditions and improving the discharge capability thereof. Optionally, the operating voltage range of the first positive electrode active material is 3.1 V to 4.0 V, and with the first positive electrode active material being within the operating voltage range of 3.1 V to 4.0 V, charging and discharging operations can be performed.

In some embodiments, the operating voltage range of the second positive electrode active material in the second active layer 122 is 1.5 V to 3.0 V. Through the arrangement of the second positive electrode active material with the lower operating voltage range to be on the side of the positive electrode active layer 12 proximal to the positive electrode current collector 11, the operating voltage continuity can be achieved.

In some embodiments, the operating voltage range of the first positive electrode active material is 3.1 V to 4.0 V, and the operating voltage range of the second positive electrode active material is 1.5 V to 3.0 V. Through the above combination and selection of the operating voltage ranges of the first positive electrode active material and the second positive electrode active material, the voltage continuity function can be better achieved, and the discharge capability of the battery can thus be improved.

In some embodiments, the first positive electrode active material includes at least one of lithium iron phosphate and lithium manganese iron phosphate. Both the lithium iron phosphate and the lithium manganese iron phosphate are positive electrode active materials that exhibit relatively high voltages, and are disposed on a side of the positive electrode active layer 12 distal to the positive electrode current collector 11, which can achieve high-rate discharge.

In some embodiments, the second positive electrode active material includes at least one of lithium iron phosphate and lithium manganese iron phosphate, and includes at least one of lithium iron(II) silicate and lithium vanadate at the same time. Through the combination of the at least one positive electrode active material of lithium iron phosphate and lithium manganese iron phosphate and the at least one positive electrode active material of lithium iron(II) silicate and lithium vanadate, a second positive electrode active material with a low voltage is enabled. The second positive electrode active material is disposed on a side of the positive electrode active layer 12 proximal to the positive electrode current collector 11, and when the voltage plateau of the first positive electrode active material discharged at a high rate abruptly drops, the second positive electrode active material can achieve voltage continuity. Additionally, the second positive electrode active material at a low state of charge (SOC) still has reactivity, and in this case, the second positive electrode active material exhibits strong power and can still react, such that the battery is enabled to have a good discharge capability.

Taking lithium iron phosphate being the first positive electrode active material as an example, as shown FIG. 3, which is a graph illustrating a high rate-discharge decline curve of lithium iron phosphate, the discharge voltage of lithium iron phosphate declines rapidly after a 3.3 V plateau. The reason for the decline is that as the discharge proceeds, lithium ions are deintercalated from the negative electrode and intercalated into the lithium iron phosphate lattice, resulting in a decrease in the voltage of lithium iron phosphate. Since lithium iron phosphate is a phase-change material, when lithium iron phosphate is fully intercalated, the voltage drops abruptly. However, in addition to the lithium iron phosphate, the second positive electrode active material includes at least one of lithium iron(II) silicate and lithium vanadate at the same time. For example, taking lithium iron(II) silicate as an example, due to the presence of lithium iron(II) silicate, the discharge can be continued to 2.0 V or even 1.5 V to achieve voltage continuity.

In some embodiments, in the second positive electrode active material, the ratio of the total weight of lithium iron phosphate and lithium manganese iron phosphate to the total weight of lithium iron(II) silicate and lithium vanadate is 1:1 to 9:1. Illustratively, taking the second positive electrode active material including lithium iron phosphate and lithium iron(II) silicate as an example, the weight ratio of the two may be 1:1, 2:1, 3:1, 4:1, 6:1, 8:1, 9:1, etc.

The slurry prepared with the second positive electrode active material within this weight ratio range exhibits good stability and can be easily applied, thereby improving the processing performance of the positive electrode plate and allowing good compatibility with the existing mass production line. Additionally, through the selection and combination of the types of the first positive electrode active material and the above second positive electrode active material, the operating voltage range of the first positive electrode active material and the operating voltage range of the second positive electrode active material can meet the range required in the present application.

In some embodiments, the particle size Dv50 of the first positive electrode active material is greater than the particle size Dv50 of the second positive electrode active material.

The size of a particulate material is referred to as the particle size, the percentage of particles in different particle size ranges to the total amount is referred to as the particle size distribution, and the volume distribution particle size refers to a particle size cumulatively calculated on a particle volume basis. For example, Dv50 represents a corresponding particle size in a sample when the cumulative volume particle size distribution percentage reaches 50%. In a specific embodiment, the average particle size can be measured by using a particle size tester.

At the final stage of discharge, the electrochemical reaction region gradually moves downward from the first active layer 121 to the second active layer 122. Since the second active layer 122 is coated with the second positive electrode active material with a smaller particle size, the total solid-phase diffusion time is reduced, which is conducive to the rapid occurrence of solid-phase reactions, thereby reducing the electrochemical polarization behavior at the final stage of high-power discharge, contributing to the improvement of the power performance of the battery, and prolonging the discharge time. Specifically, the second positive electrode active material and the first positive electrode active material exhibit a gradient distribution of particle sizes along the thickness direction of the positive electrode plate. During the discharging process at a low state of charge, as the first positive electrode active material distal to the positive electrode current collector 11 has completed the reaction at a high state of charge due to the influence of liquid-phase concentration polarization of the electrode plate, the electrochemical reaction region is mainly the second positive electrode active material in a region proximal to the positive electrode current collector 11, and in this case, the main region where the lithium-intercalation reaction occurs is the second active layer 122. Since the particle size of the second positive electrode active material in the second active layer 122 is small, the total solid-phase diffusion time is reduced, and in this case, the solid-phase lithium-intercalation reaction rapidly occurs, thereby reducing the electrochemical polarization behavior at the final stage of high-power discharge. This is conducive to improving the power performance of the battery and prolonging the discharge power at a low state of charge.

Therefore, the positive electrode active material with a small particle size not only has a high charging and discharging power density, but also has a low voltage plateau. Therefore, the combination of the first positive electrode active material and the second positive electrode active material with the above particle sizes can not only enable good voltage continuity, but also make excessively large voltage polarization less likely to occur, thereby further improving the power density.

In some embodiments, the particle size Dv50 of the first positive electrode active material is 300 nm to 2 µm, and the particle size Dv50 of the second positive electrode active material is 10 nm to 300 nm. Illustratively, the particle size Dv50 of the first positive electrode active material may be 300 nm, 500 nm, 800 nm, 900 nm, 1 µm, 1.2 µm, 1.5 µm, 1.8 µm, 2 µm, etc., and the particle size Dv50 of the second positive electrode active material may be 10 nm, 40 nm, 50 nm, 80 nm, 100 nm, 150 nm, 180 nm, 200 nm, 220 nm, 250 nm, 280 nm, 300 nm, etc. The first positive electrode active material within the above particle size range enables the battery to have good kinetics performance in charging and discharging, and meanwhile provides the corresponding slurry with a good processing performance, and the second positive electrode active material within the above particle size range can achieve a low voltage plateau and combine with the first positive electrode active material for voltage continuity.

In some embodiments, the weight ratio of the first positive electrode active material to the second positive electrode active material is 7:3 to 9:1. Illustratively, the weight ratio of the two may be 7:3, 8:2, 9:1, etc. The first positive electrode active material and the second positive electrode active material combined in this weight ratio enable the overall operating voltage plateau of the positive electrode plate to be high, which is conducive to the improvement of the energy density of the battery.

In some embodiments, the coating weight of the first active layer is 160 mg/1540.25 mm² to 500 mg/1540.25 mm², and the coating weight of the second active layer is 16 mg/1540.25 mm² to 100 mg/1540.25 mm². Illustratively, the coating weight of the first active layer may be 160 mg/1540.25 mm², 200 mg/1540.25 mm², 250 mg/1540.25 mm², 300 mg/1540.25 mm², 350 mg/1540.25 mm², 400 mg/1540.25 mm², 450 mg/1540.25 mm², 500 mg/1540.25 mm², etc. The coating weight of the second active layer may be 16 mg/1540.25 mm², 25 mg/1540.25 mm², 30 mg/1540.25 mm², 40 mg/1540.25 mm², 50 mg/1540.25 mm², 60 mg/1540.25 mm², 70 mg/1540.25 mm², 80 mg/1540.25 mm², 90 mg/1540.25 mm², etc. The total compaction density of the first active layer and the second active layer may be 2.3 g/cm³ to 3.0 g/cm³.

In the case of the above coating weight range and the high compaction density, the energy density of the battery cell can reach 400 Wh/L to 470 Wh/L, providing a strong application potential.

The above coating weight refers to a single-side coating weight, which is a unit area weight on one side of the positive electrode current collector 11 after the slurry of the active layer is applied and dried. The positive electrode plate according to the embodiments of the present application can achieve both a high coating weight and a high compaction density while making the power density less prone to decrease.

Porosity refers to the percentage of the pore volume in a porous material to the total volume of the material in its natural state. The ratio of the total volume of interconnected micro voids in a porous material to the bulk volume of the porous material is referred to as the effective porosity, expressed in φ_e; the ratio of the total volume of all interconnected and non-interconnected micro voids in a porous material to the bulk volume of the porous medium is referred to as the absolute porosity or total porosity, expressed in φ_T. The porosity of the active layer in the embodiments of the present application refers to the effective porosity φ_e of the material of the active layer.

In some embodiments, the porosity of the first active layer 121 is greater than the porosity of the second active layer 122. Through the above combination of the porosities of the first active layer 121 and the second active layer 122, the positive electrode plate exhibits a gradient porosity distribution; that is, the porosity exhibits a decreasing trend from the side of the positive electrode active layer 12 distal to the positive electrode current collector 11 to the side of the positive electrode active layer proximal to the positive electrode current collector 11. This reduces the liquid-phase concentration polarization and facilitates high-power charging and discharging.

Tortuosity is also referred to as the tortuosity factor. In a porous structure of a lithium-ion battery electrode plate, due to the inherent curvature of the pores, the liquid-phase concentration polarization is generated. To quantify and define this phenomenon, the tortuosity factor is defined as the ratio of the length of the actual path along which the electrolytic solution diffuses in the electrode plate of the lithium-ion battery to the macroscopic coating layer thickness of the electrode plate. The overall tortuosity of the electrode plate may be measured by electrochemical impedance spectroscopy (EIS), and the comparison relationship between the tortuosities of the first active layer and the second active layer in the electrode plate layer may be measured by SEM tomography.

In some embodiments, the tortuosity of the first active layer 121 is less than the tortuosity of the second active layer 122. Through the above combination of the porosities and tortuosities of the first active layer 121 and the second active layer 122, the positive electrode plate exhibits a gradient tortuosity distribution; that is, the tortuosity exhibits an increasing trend from the side of the positive electrode active layer 12 distal to the positive electrode current collector 11 to the side of the positive electrode active layer proximal to the positive electrode current collector 11. This reduces the liquid-phase concentration polarization and facilitates high-power charging and discharging.

After the positive electrode plate is manufactured, the comparison results between the tortuosities and the porosities of the first active layer and the second active layer can be learned by observing and comparing the cross-section of the positive electrode plate using a high-resolution scanning electron microscope.

In some embodiments, the first active layer 121 includes a first positive electrode active material, a conductive agent, and a binder. The mass proportion of the first positive electrode active material may be 95%-100%; that is, the conductive agent and the binder may or may not be added. Specifically, the mass ratio of the first positive electrode active material, the conductive agent, and the binder in the first active layer 121 may be (95-99):(0.5-2.5):(0.5-2.5). The second active layer 122 includes a second positive electrode active material, a conductive agent, and a binder. The mass proportion of the second positive electrode active material may be 95%-100%; that is, the conductive agent and the binder may or may not be added. Specifically, the mass ratio of the second positive electrode active material, the conductive agent, and the binder in the second active layer 122 may be (97-99):(0.5-1.5):(0.5-1.5).

As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin. As an example, the conductive agent may include at least one of superconducting carbon, acetylene black, carbon black, Ketjen black, a carbon dot, a carbon nanotube, graphene, and a carbon nanofiber.

In some embodiments, a metal foil or a composite current collector may be used as the positive electrode current collector 11. For example, as the metal foil, an aluminum foil or a stainless steel foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a conductive coating layer 123 is further provided between the second active layer 122 and the positive electrode current collector 11, and the conductive agent is present in an amount of 50%-95% in the conductive coating layer 123 based on a total weight of 100% of the conductive coating layer. Through the arrangement of the conductive coating layer 123 with a high content of conductive agent, the conductive performance of the positive electrode active layer 12 and the positive electrode current collector 11 can be improved.

Specifically, the conductive coating layer 123 is composed of a conductive agent and a binder, the conductive agent in the conductive coating layer 123 may include at least one of conductive carbon black, a single-walled carbon nanotube, and a multi-walled carbon nanotube, and the binder in the conductive coating layer 123 may include one or a combination of more of polyvinylidene fluoride (PVDF), polyacrylic acid (PAA), carboxymethyl cellulose, styrene-butadiene rubber, and calcium hydroxide, where the weight proportion of the conductive agent is up to 50%-95%, so as to improve the conductive performance between the positive electrode active layer 12 and the positive electrode current collector 11.

In a second aspect, the embodiments of the present application provide a preparation method for the above positive electrode plate. The preparation method includes:

In S01, a second active layer 122 is prepared on at least one surface of a positive electrode current collector 11.

In S02, a first active layer 121 is prepared on a surface of the second active layer 122 distal to the positive electrode current collector 11.

Through the sequential preparation of the specific second active layer 122 and first active layer 121 on the positive electrode current collector 11 to obtain the positive electrode active layer 12 of the positive electrode plate, the process is simple, the voltage range under high-power discharge conditions can be expanded through the relationship between the operating voltage range of the second positive electrode active material in the second active layer 122 and the operating voltage range of the first positive electrode active material in the first active layer 121, and thus the reactivity is still present at a low state of charge. Therefore, the prepared positive electrode plate can enable the battery to have a good discharge capability.

Specifically, for specific material types and combinations of the positive electrode current collector 11, the second active layer 122, and the first active layer 121, reference may be made to the above description.

In some embodiments, the preparation method for the positive electrode active layer 12 includes: coating the positive electrode current collector 11 with a second positive electrode slurry containing the second positive electrode active material, the conductive agent, and the binder in the above ratio, and drying to obtain the second active layer 122 of the positive electrode active layer 12; and then coating the second active layer 122 with a first positive electrode slurry containing the first positive electrode active material, the conductive agent, and the binder in the above ratio, and drying to obtain the first active layer 121 of the positive electrode active layer 12. The above first active layer 121 and second active layer 122 constitute the positive electrode active layer 12.

In some embodiments, the step of preparing the second active layer 122 on at least one surface of the positive electrode current collector 11 includes:

first preparing the conductive coating layer 123 on at least one surface of the positive electrode current collector 11, and then preparing the second active layer 122 on the surface of the conductive coating layer 123 distal to the positive electrode current collector 11, where a conductive agent is present in an amount of 50%-95% in the conductive coating layer 123 based on a total weight of 100% of the conductive coating layer 123. For the specific selection of the material type of the conductive coating layer 123, reference may be made to the above description. Through the preparation of the conductive coating layer 123 with a high content of conductive agent, the conductive performance of the positive electrode active layer 12 and the positive electrode current collector 11 can be improved.

Subsequently, a positive electrode plate product is prepared by means of the conventional electrode plate preparation method of cold pressing and die cutting, and then assembled with a negative electrode plate, a separator, and an electrolytic solution to prepare a battery.

### Battery

In a third aspect, the embodiments of the present application provide a battery. The battery includes the positive electrode plate provided in the first aspect of the embodiments of the present application and/or a positive electrode plate prepared by using the preparation method provided in the second aspect of the embodiments of the present application.

The battery provided in the embodiments of the present application adopts the specific positive electrode plate according to the embodiments of the present application. Based on the characteristics of the positive electrode plate according to the embodiments of the present application, the battery according to the embodiments of the present application is enabled to have a good discharge capability.

Specifically, the battery may be a secondary battery, which includes a positive electrode plate, a negative electrode plate, and a separator disposed between the positive electrode plate and the negative electrode plate. The positive electrode plate is the positive electrode plate provided in the first aspect of the embodiments of the present application and/or the positive electrode plate prepared by using the preparation method provided in the second aspect of the embodiments of the present application.

In some embodiments, the secondary battery includes a lithium-ion battery. During the charging and discharging process of the battery, active lithium ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to primarily prevent the positive and negative electrodes from short-circuiting, while allowing the passage of lithium ions.

The electrolyte conducts ions between the positive electrode plate and the negative electrode plate. The embodiments of the present application have no specific restrictions on the type of the electrolyte, which can be selected according to needs. For example, the electrolyte may be liquid, gel, or all solid.

In some embodiments, the negative electrode plate includes a negative electrode current collector and a negative electrode active layer disposed on at least one surface of the negative electrode current collector. For the negative electrode current collector, a metal foil or a composite current collector may be used. For example, as the metal foil, a copper foil may be used. The composite current collector may include a polymer material substrate and a metal layer formed on at least one surface of the polymer material base layer. The composite current collector may be formed by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

The negative electrode active layer contains a negative electrode active material, including at least one of artificial graphite, natural graphite, soft carbon, hard carbon, a silicon-based material, a tin-based material, and the like. A binder is further optionally included. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The negative electrode active layer further optionally includes a conductive agent. The conductive agent may be selected from at least one of superconducting carbon, acetylene black, carbon black, Ketjen black, a carbon dot, a carbon nanotube, graphene, and a carbon nanofiber.

In some embodiments, the negative electrode active layer further optionally includes other auxiliary agents, such as a dispersant and a thickener (e.g., sodium carboxymethylcellulose (CMC-Na)).

In some embodiments, the electrolyte is an electrolytic solution. The electrolytic solution includes an electrolyte salt and a solvent. In the case where the secondary battery is a lithium-ion battery, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent in the electrolytic solution may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

In some embodiments, the secondary battery according to the embodiments of the present application may include any one of a battery cell, a battery module, and a battery pack.

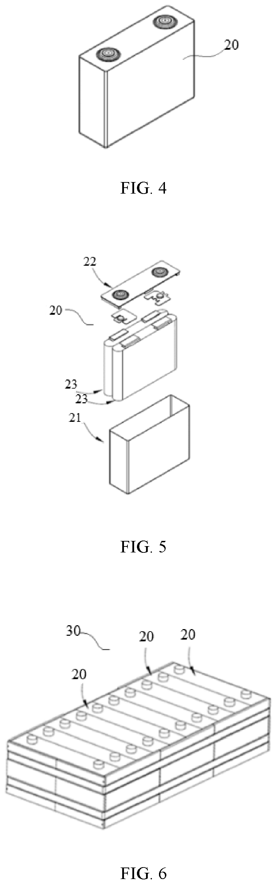

The battery cell includes a battery housing and an electrode assembly packaged in the battery housing. The shape of the battery cell is not particularly limited, and it may have a cylindrical shape, a prismatic shape, or any other shape. A battery cell 20 of a prismatic structure is shown in FIG. 4.

In some embodiments, as shown in FIG. 5, the outer packaging of the battery cell 20 may include a housing 21 and a top cover assembly 22. The housing 21 may include a bottom plate and side plates connected to the bottom plate. The bottom plate and the side plates define, in an enclosing manner, an accommodating cavity. The housing 21 is provided with an opening communicating with the accommodating cavity, and the top cover assembly 22 is configured to lid the opening to seal the accommodating cavity. The positive electrode plate, the separator, and the negative electrode plate included in the secondary battery according to the embodiments of the present application may form an electrode assembly 23 through a winding process and/or a stacking process. The electrode assembly 23 is packaged in the accommodating cavity. The electrolytic solution is infiltrated into the electrode assembly 23. The number of electrode assemblies 23 included in the battery cell 20 may be one or more and may be adjusted according to actual needs.

Preparation methods for the battery cell 20 are well known. In some embodiments, the positive electrode plate, the separator, the negative electrode plate, and the electrolytic solution may be assembled to form a battery cell 20. As an example, the battery cell 20 may be obtained by subjecting the positive electrode plate, the separator, and the negative electrode plate to a winding process and/or a stacking process to form the electrode assembly 23, placing the electrode assembly 23 in the outer packaging, injecting the electrolytic solution into the outer packaging after drying, and then performing vacuum packaging, standing, formation, shaping, and other procedures.

The battery module is formed by assembling the battery cells 20; that is, the battery module may include a plurality of battery cells 20, and the specific number may be adjusted according to the application and the capacity of the battery module.

In some embodiments, FIG. 6 is a schematic diagram of a battery module 30 as one example. In the battery module 30, a plurality of battery cells 20 may be sequentially disposed in a length direction of the battery module 30. Certainly, the arrangement may also be in any other manner. Further, the plurality of battery cells 20 may be fixed by fasteners.

Optionally, the battery module 30 may further include an outer shell having an accommodating space in which the plurality of battery cells 20 are accommodated.

The battery pack is formed by assembling the above battery cells 20; that is, the battery pack may include a plurality of battery cells 20, where a plurality of the battery cells 20 may be assembled into the above battery module 30. The specific number of battery cells 20 or battery modules 30 included in the battery pack may be adjusted according to the application and the capacity of the battery pack.

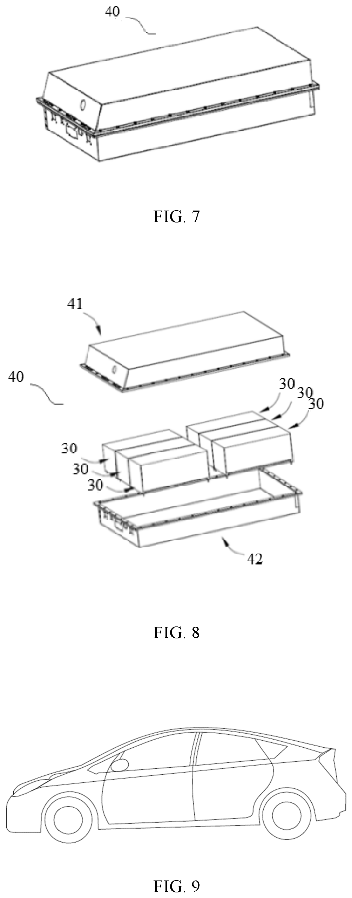

As shown in embodiments, FIG. 7 and FIG. 8 are schematic diagrams of a battery pack 40 as one example. The battery pack 40 may include a battery case and a plurality of battery modules 30 disposed in the battery case. The battery case includes an upper case body 41 and a lower case body 42. The upper case body 41 is configured to lid the lower case body 42 and the two form a closed space for accommodating the battery modules 30. The plurality of battery modules 30 may be arranged in any manner in the battery case.

### Electric Device

In a fourth aspect, the embodiments of the present application further provide an electric device. The electric device includes the battery provided in the third aspect of the present application. The battery may be used as a power source for the electric device, or as an energy storage unit for the electric device. Therefore, the electric device according to the embodiments of the present application has good charging and discharging performance and can work efficiently.

The electric device may be, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like. A secondary battery, a battery module, or a battery pack may be selected according to its use requirements.

FIG. 9 is a schematic diagram of an electric device as one example. The electric device is a pure electric vehicle, a hybrid electric vehicle, a plug-in hybrid electric vehicle, or the like. To meet the requirements of the electric device for high power and high energy density of the battery, a battery pack or a battery module may be used.

As another example, the electric device may be a mobile phone, a tablet computer, a notebook computer, or the like. The electric device is generally required to be light and thin, and a secondary battery may thus be used as the power source.

### Examples

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### 1. Examples of positive electrode plate and preparation method therefor

### Example A1

Prepared was a positive electrode plate, which included a positive electrode current collector, and a second active layer and a first active layer that are sequentially disposed on the positive electrode current collector. The positive electrode current collector was a 15 µm aluminum foil, the material of the second active layer (based on the total weight of 100%) was 48% of lithium iron phosphate with a Dᵥ50 of 100 nm, 48% of lithium iron(II) silicate with a Dᵥ50 of 200 nm, 2% of acetylene black, and 2% of PVDF, the material of the second active layer (based on the total weight of 100%) was 96% of lithium iron phosphate with a Dᵥ50 of 0.3 µm, 2% of acetylene black, and 2% of PVDF, and the weight ratio of the second active layer to the first active layer was 10:90.

The preparation method for a positive electrode plate according to the embodiments of the present application includes the following steps:
Lithium iron phosphate with a Dᵥ50 of 100 nm, lithium iron(II) silicate with a Dᵥ50 of 200 nm, a conductive agent acetylene black, and a binder PVDF were uniformly stirred and mixed in a solvent N-methylpyrrolidone in percentage contents of 48%, 48%, 2%, and 2%, respectively, base on final coating layer composition, to obtain a coating slurry for a second active layer. Lithium iron phosphate with a Dᵥ50 of 0.3 µm, a conductive agent acetylene black, and a binder PVDF were uniformly stirred and mixed in a solvent N-methylpyrrolidone in percentages of 96%, 2%, and 2%, respectively, based on final coating composition, to obtain a coating slurry for a first active layer. Then, a 15 µm aluminum foil positive electrode current collector was uniformly coated with the coating slurry for the second active layer and the coating slurry for the first active layer through a dual-layer coating die by means of extrusion spraying in a weight ratio of 10:90, so as to form the second active layer and the first active layer that are sequentially stacked, i.e., a positive electrode active layer, with a total weight of coating on one side after final drying being recorded as 430 mg/1540.25 mm². Subsequently, drying, cold pressing at 2.63 g/cm³, and slitting were performed to obtain the positive electrode plate.

### Example A2

Provided were a positive electrode plate and a preparation method therefor, the difference of which from those of Example A1 was that, before the second active layer and the first active layer were prepared on the aluminum foil positive electrode current collector, a conductive coating layer was first prepared on the aluminum foil positive electrode current collector. Specifically, acetylene black, CMC, PAA, and calcium hydroxide were stirred and mixed in a solvent N-methylpyrrolidone in percentage contents of 85%, 5%, 5%, and 5%, respectively, based on final coating layer composition, to obtain a coating slurry for the conductive coating layer. Then, the coating slurry for the conductive coating layer was uniformly applied to a 15 µm aluminum foil positive electrode current collector by means of extrusion spraying, and then dried on the aluminum foil positive electrode current collector to prepare the conductive coating layer. Subsequently, the second active layer and the first active layer were prepared.

### Example A3

Prepared was a positive electrode plate, the difference of which from that of Example A1 is shown in Table 1.

### Example A4

Prepared was a positive electrode plate, the difference of which from that of Example A1 is shown in Table 1.

### Example A5

Prepared was a positive electrode plate, the difference of which from that of Example A1 is shown in Table 1.

### Example A6

Prepared was a positive electrode plate, the difference of which from that of Example A1 is shown in Table 1.

### Example A7

Prepared was a positive electrode plate, the difference of which from that of Example A1 is shown in Table 1.

### Example A8

Prepared was a positive electrode plate, the difference of which from that of Example A1 is shown in Table 1.

### Example A9

Prepared was a positive electrode plate, the difference of which from that of Example A1 is shown in Table 1.

### Example A10

Prepared was a positive electrode plate, the difference of which from that of Example A1 is shown in Table 1.

### Comparative Example A1

Provided were a positive electrode plate and a preparation method therefor, the difference of which from those of Example A1 was that:
Only the first active layer was prepared on the 15 µm aluminum foil positive electrode current collector, with a coating weight of the first active layer after drying being recorded as 430 mg/1540.25 mm², and then drying, cold pressing at 2.63 g/cm³, and slitting were performed to obtain the positive electrode plate.

### Comparative Example A2

Provided were a positive electrode plate and a preparation method therefor, the difference of which from those of Example A1 was that:
Only one positive electrode active layer was prepared. Specifically, lithium iron phosphate with a Dᵥ50 of 100 nm, lithium iron phosphate with a Dᵥ50 of 0.3 µm, acetylene black, and PVDF were uniformly stirred and mixed in a solvent N-methylpyrrolidone in percentage contents of 9.6%, 86.4%, 2%, and 2%, respectively, based on final composition of the positive electrode active layer, to obtain a positive electrode coating slurry. Then, the positive electrode coating slurry was uniformly applied to a 15 µm primer coating substrate by means of extrusion spraying to form one positive electrode active layer, with a coating weight of the positive electrode active layer after drying being recorded as 430 mg/1540.25 mm². Subsequently, drying, cold pressing at 2.63 g/cm³, and slitting were performed to obtain the positive electrode plate.

### 2. Examples of secondary battery cells

Example B1 to Example B10 and Comparative Example B1 to Comparative Example B2

Example B1 to Example B10 and Comparative Example B1 to Comparative Example B2 each provided a secondary battery cell, and each secondary battery cell included a bare core formed by a positive electrode plate, a separator, and a negative electrode plate, and further included an electrolytic solution. The positive electrode plates of Example B1 to Example B10 and Comparative Example B1 to Comparative Example B2 corresponded to the positive electrode plates provided in Example A1 to Example A10 and Comparative Example A1 to Comparative Example A2, respectively. The positive electrode plate in Example A1 was used as the positive electrode plate in the battery core of the secondary battery Example B1, the positive electrode plate in Example A2 was used as the positive electrode plate in the battery core of the secondary battery Example B2, and so on. Similarly, the positive electrode plate in Comparative Example A10 was used as the positive electrode plate in the battery core of the secondary battery Comparative Example B10.

The preparation method for the secondary battery cell includes:
Preparation of a positive electrode plate: Reference can be made to the positive electrode plates provided in Example A1 to Example A10 and Comparative Example A1 to Comparative Example A2.

### Preparation of negative electrode plate:

Natural graphite, artificial graphite, a single-walled carbon nanotube, acetylene black, CMC, and SBR were uniformly stirred and mixed in percentage contents of 42%, 42%, 10%, 2.0%, 1.8%, and 2.2%, respectively, to obtain a negative electrode slurry. Then, a 6 µm copper foil current collector was uniformly coated with the slurry by means of extrusion spraying, and then drying, cold pressing, and slitting were performed to obtain the negative electrode plate.

### Preparation of electrolytic solution:

In a glove box under an argon atmosphere (H₂O < 0.1 ppm, O₂ < 0.1 ppm), the organic solvents ethylene carbonate (EC) and ethyl methyl carbonate (EMC) were uniformly mixed in a volume ratio of 3:7. Then, 12.5% of LiPF₆ lithium salt was added and dissolved in the organic solvent, followed by uniform stirring to obtain the electrolytic solution.

### Separator: A polypropylene film was used as the separator.

### [Battery assembly]

Secondary battery assembly: The prepared negative electrode plate and positive electrode plate and a polypropylene porous separator were sequentially stacked and subjected to a winding process to prepare an electrode assembly with a theoretical capacity of 30 Ah, and then procedures such as packaging, electrolytic solution injection, formation, and sorting were performed to prepare a cylindrical lithium-ion secondary battery, i.e., a secondary battery cell.

### Performance Testing

The positive electrode plates and the secondary battery cells of the above Examples and Comparative Examples were separately tested.

### (1) Positive electrode plate

### [Particle size test]

### Steps for Dᵥ50 test of positive electrode active material:

10 mg of the positive electrode active material was dispersed in an ethanol solution, and ultrasonic dispersion was conducted, with the test being performed by a laser method for particle size measurement using a Malvern Master 3000 particle size analyzer. After the data was processed by the computer, the particle size distribution curve of the positive electrode active substance material was obtained, and the particle size distribution of 50% particles was obtained, i.e., Dv50.

### [Voltage plateau test]

Voltage plateau calculation: A positive electrode plate containing a positive electrode active material, a separator, and a metallic lithium negative electrode were assembled into a coin-type half-cell. The coin-type half-cell was charged at 0.33C until the voltage was 3.8 V (LFP) or 4.2 V (LMFP), and then left to stand for 10 min. The coin-type half-cell was discharged at 0.33C until the voltage of the coin-type half-cell reached 1.5 V. During the discharging process at 0.33C, the discharge energy E and the capacity C of the core were recorded, and the charge and discharge voltage plateau range of the core, i.e., the operating voltage range of the positive electrode active material, was obtained according to the formula V = E/C.

### [Coating layer tortuosity test]

Measurement of the tortuosity of the entire positive electrode active layer (electrochemical impedance spectroscopy): The electrode plate containing the positive electrode active material and the separator were assembled into a pouch-type symmetric cell, and 60 uL of a 50 mM tetrabutylammonium perchlorate electrolytic solution (in which the solvents EC:DMC was 1:1, and the lithium ion conductivity was 1.7 mS/cm) was added for each cell. The electrochemical impedance spectrum was tested in the frequency range of 200 kHz to 50 mHz. The tortuosity could be calculated by using τ/ε = Rᵢₒₙ × S × kᵢₙₜ/l, where τ represents the tortuosity, ε represents the porosity, l represents the thickness of the electrode plate, S represents the area of the electrode plate, kᵢₙₜ represents the lithium ion conductivity of the electrolytic solution, and Rᵢₒₙ represents the lithium ion impedance. Rᵢₒₙ = 3 × (Rₕ - Rₗ), where Rₕ represents the high-frequency intercept of the impedance spectrum, and Rₗ represents the low-frequency intercept.

Comparison and measurement of the tortuosities of the first active layer and the second active layer (tomographic SEM electron micrograph-based tortuosity calculation): The tomographic SEM images were imported into ImagJ software, and grayscale and contrast were adjusted to obtain ion passages containing no active substance. The ion transport paths in the passages along the thickness direction of the electrode plate were counted by using an imageological method; the ratio of the counted value to the thickness of the corresponding coating layer of the electrode plate was calculated. Then, tortuosity comparison was conducted.

### (2) Secondary battery cell

Electrochemical performance test: The secondary battery cells prepared in the above examples and comparative examples were tested for room-temperature discharge DCR (internal resistance). At 25°C, the cores were fully charged at 1/3, then discharged at 1/3C to 50% SOC, and left to stand for 30 min, and the voltage at this time was recorded as V0. Then, the cores were discharged at a discharge current I of 4C for 10 s, and the voltage at this time was recorded as V1, and DCR = [(V0 - V1)/I].

The test results are shown in Table 2.

**Table 1. Composition of the positive electrode active layer**

| **Parameters of layers** | **Second active layer** | | | **First active layer** | | | **Weight ratio of the first positive electrode active material to the second positive electrode active material** | **Total compa ction density** (g/cm³) |
|---|---|---|---|---|---|---|---|---|
| | Dv50 of the second positive electrode active material | Voltage range (V) | Coating weight/154 0.25 mm² | Dv50 of the first positive electrode active material | Voltage range (V) | Coating weight/ 1540.25 mm² | | |
| Example A1 | Lithium iron phosphate 100 nm Lithium iron(II) silicate 200 nm | 2.0-3.0 | 43 mg | Lithium iron phosphate 0.3 µm | 3.1-4.0 | 387 mg | 9:1 | 2.63 |
| Example A2 | The difference from Example A1 was that a conductive coating layer was provided between the second active layer and the current collector. | | | | | | | |
| Example A3 | The difference from Example A1 was that the first active layer had no conductive agent, and the ratio of the first active material to the binder was 98:2. | | | | | | | |
| Example A4 | The difference from Example A1 was that the coating weight of the second active layer was 129 mg, and the coating weight of the second active layer was 301 mg (the weight ratio of the first positive electrode active material to the second positive electrode active material was 7:3). | | | | | | | |
| Example A5 | The difference from Example A1 was that in the second active layer, lithium iron phosphate:lithium iron(II) silicate:conductive agent:binder = 86.4:9.6:2:2. | | | | | | | |
| Example A6 | The difference from Example A1 was that the second positive electrode active material was lithium iron phosphate (100 nm) and lithium vanadate (300 nm) in the same proportion. | | | | | | | |
| Example A7 | The difference from Example A1 was that the first positive electrode active material was lithium manganese iron phosphate (0.3 µm) with a voltage range of 3.1 V to 4.2 V. | | | | | | | |
| Example A8 | The difference from Example A1 was that the first positive electrode active material was lithium iron phosphate (0.1 µm). | | | | | | | |
| Example A9 | The difference from Example A1 was that the first positive electrode active material was lithium iron phosphate (1 µm). | | | | | | | |
| Example A10 | The difference from Example A1 was that the second positive electrode active material was lithium iron phosphate (200 nm) and lithium iron(II) silicate (500 nm) in the same proportion, and the first positive electrode active material was lithium iron phosphate (0.5 µm). | | | | | | | |
| Comparative Example A1 | The difference from Example 1 was that only the first active layer was prepared on the positive electrode current collector, with a coating weight of 430 mg. | | | | | | | |
| Comparative Example A2 | The difference from Example 1 was that the coating with lithium iron phosphate with a Dv50 100 nm, lithium iron(II) silicate with a Dv50 of 0.3 µm, acetylene black, and PVDF in percentage contents of 86.4%, 9.6%, 2%, and 2%, respectively, was performed to form an entire positive electrode active layer, with a coating weight of 430 mg. of | | | | | | | |

**Table 2. Test results**

| Test parameters | Tortuosity of the positive electrode plate of the secondary battery cell | | DCR of the secondary battery cell Ω | Discharge terminal voltage (V) of the secondary battery cell at 50% SOC, 25°C, and 5 KW |
|---|---|---|---|---|
| | Magnitude relationship between the tortuosities of the second active layer and the first active layer | Overall tortuosity | | |
| Example B1 | Second active layer > first active layer | 3.0 | 0.040 | 2.3 |
| Example B2 | Second active layer > first active layer | 3.0 | 0.038 | 2.32 |
| Example B3 | Second active layer = first active layer | 3.0 | 0.042 | 2.1 |
| Example B4 | Second active layer > first active layer | 3.0 | 0.037 | 2.4 |
| Example B5 | Second active layer > first active layer | 3.0 | 0.041 | 2.29 |
| Example B6 | Second active layer > first active layer | 3.0 | 0.036 | 2.42 |
| Example B7 | Second active layer > first active layer | 3.0 | 0.034 | 2.7 |
| Example B8 | Second active layer > first active layer | 3.4 | 0.039 | 2.31 |
| Example B9 | Second active layer > first active layer | 3.3 | 0.050 | 2.0 |
| Example B10 | Second active layer > first active layer | 3.5 | 0.048 | 2.05 |
| Comparative Example B1 | - | 3.9 | 0.055 | 1.6 |
| Comparative Example B2 | | 3.6 | 0.051 | 2.0 |

As can be seen from Table 2, based on the examples of the present application, the positive electrode active layer of the positive electrode plate includes two layers, i.e., the second active layer and the first active layer that are sequentially arranged on the positive electrode current collector. The operating voltage range of the first positive electrode active material is 3.1 V to 4.0 V, which is greater than the operating voltage range of the second positive electrode active material, i.e., 2.0 V to 3.0 V, and the overall tortuosity is less than that of the comparative examples with only one active layer. In this way, the DCR internal resistance of the battery according to the examples of the present application is smaller, and the discharge terminal voltage is larger when tested under the same conditions (discharge at 50% SOC, 25°C, and 5 KW); that is, the battery according to the examples of the present application has a better discharge capability.

Compared with Example B1, the presence of a conductive coating layer between the second active layer and the current collector in the positive electrode plate of the battery in Example B2 further improves the discharge capability of the battery. Compared with Example B1, the positive electrode plate of the battery in Example B3 has no conductive agent provided in the second active layer and the tortuosities of the two active layers are substantially the same, and thus the discharge capability of the battery is reduced. Compared with Example B1, the positive electrode plate of the battery in Example B4 has an increased proportion of the second positive electrode active material and the discharge capacity in a low voltage range can be prolonged, and thus the discharge capability of the core is improved. Compared with Example B1, the positive electrode plate of the battery in Example B5 has a decreased proportion of the lithium iron(II) silicate in the second active layer and the discharge capacity in a low voltage range is reduced, and thus the discharge capability of the core is reduced. Compared with Example B1, the positive electrode plate of the battery in Example B6 adopts lithium vanadate in the second active layer, and as the three-dimensional ion transport channel of the lithium vanadate increases the ion transport paths, the discharge capability is improved. Compared with Example B1, the positive electrode plate of the battery in Example B7 adopts lithium manganese iron phosphate in the first active layer, and as the voltage of the lithium manganese iron phosphate is higher, the terminal voltage of the core is higher, and the discharge capability is further enhanced. Compared with Example B1, the positive electrode plate of the battery in Example B8 adopts lithium iron phosphate with a smaller particle size in the first active layer, such that the lithium ion diffusion path is reduced, and the discharge capability is enhanced. Compared with Example B1, the positive electrode plate of the battery in Example B9 adopts lithium manganese iron phosphate with a larger particle size in the first active layer, such that the lithium ion diffusion path is increased, and the discharge capability is reduced. Compared with Example B1, the particle sizes of the active materials of the positive electrode plate of the battery in Example B10 are all increased, such that the lithium ion diffusion path is increased, and the discharge capability is reduced.

Finally, it should be noted that the above examples are only used to illustrate the technical solutions of the present application, rather than limit the same. Although the present application has been described in detail with reference to the foregoing examples, those of ordinary skill in the art should understand that modifications can still be made to the technical solutions recorded in the foregoing examples, or equivalent substitutions to some or all of the technical features can be made. However, such modifications or substitutions do not make the spirit of the corresponding technical solutions deviate from the scope of the technical solutions in the examples of the present application, and shall all fall within the scope of claims and specification of the present application. In particular, the technical features mentioned in the examples can be combined in any manner, provided that there is no structural conflict. The present application is not limited to particular examples disclosed herein but includes all the technical solutions that fall within the scope of the claims.

## Claims

1. A positive electrode plate, comprising a positive electrode current collector and a positive electrode active layer disposed on at least one surface of the positive electrode current collector, wherein the positive electrode active layer comprises a first active layer and a second active layer, with the second active layer being located between the positive electrode current collector and the first active layer;
the first active layer comprises a first positive electrode active material, the second active layer comprises a second positive electrode active material, an operating voltage range of the first positive electrode active material is greater than an operating voltage range of the second positive electrode active material, and the operating voltage range of the second positive electrode active material is less than or equal to 3.0 V.

2. The positive electrode plate according to claim 1, wherein the operating voltage range of the first positive electrode active material is greater than 3.0 V, and optionally, the operating voltage range of the first positive electrode active material is 3.1 V to 4.0 V; and/or
the operating voltage range of the second positive electrode active material is 1.5 V to 3.0 V.

3. The positive electrode plate according to claim 1 or 2, wherein the first positive electrode active material comprises at least one of lithium iron phosphate and lithium manganese iron phosphate; and/or
the second positive electrode active material comprises at least one of lithium iron phosphate and lithium manganese iron phosphate, and comprises at least one of lithium iron(II) silicate and lithium vanadate at the same time; optionally, in the second positive electrode active material, a ratio of a total weight of lithium iron phosphate and lithium manganese iron phosphate to a total weight of lithium iron(II) silicate and lithium vanadate is 1:1 to 9:1.

4. The positive electrode plate according to any one of claims 1 to 3, wherein a particle size Dv50 of the first positive electrode active material is greater than a particle size Dv50 of the second positive electrode active material; optionally,
the particle size Dv50 of the first positive electrode active material is 300 nm to 2 µm, and the particle size Dv50 of the second positive electrode active material is 10 nm to 300 nm.

5. The positive electrode plate according to any one of claims 1 to 4, wherein a weight ratio of the first positive electrode active material to the second positive electrode active material is 7:3 to 9:1.

6. The positive electrode plate according to claim 5, wherein a coating weight of the first active layer is 160 mg/1540.25 mm² to 500 mg/1540.25 mm², and a coating weight of the second active layer is 16 mg/1540.25 mm² to 100 mg/1540.25 mm²; and/or
a total compaction density of the first active layer and the second active layer is 2.3 g/cm³ to 3.0 g/cm³.

7. The positive electrode plate according to any one of claims 1 to 6, wherein a porosity of the first active layer is greater than a porosity of the second active layer; and/or
a tortuosity of the first active layer is less than a tortuosity of the second active layer.

8. The positive electrode plate according to any one of claims 1 to 7, wherein a conductive coating layer is further provided between the second active layer and the positive electrode current collector, and a conductive agent is present in an amount of 50%-95% in the conductive coating layer based on a total weight of 100% of the conductive coating layer.

9. A preparation method for the positive electrode plate according to any one of claims 1 to 7, comprising:
preparing the second active layer on at least one surface of the positive electrode current collector; and
preparing the first active layer on a surface of the second active layer distal to the positive electrode current collector.

10. The preparation method according to claim 9, wherein the step of preparing the second active layer on at least one surface of the positive electrode current collector comprises:
first preparing the conductive coating layer on at least one surface of the positive electrode current collector, and then preparing the second active layer on a surface of the conductive coating layer distal to the positive electrode current collector, wherein a conductive agent is present in an amount of 50%-95% in the conductive coating layer based on a total weight of 100% of the conductive coating layer.

11. A battery, comprising the positive electrode plate according to any one of claims 1 to 8 and/or a positive electrode plate prepared by the preparation method according to any one of claims 9 to 10.

12. An electric device, comprising the battery according to claim 11.
